# EUROPEAN PATENT APPLICATION

(11) **EP 3 358 583 A1**
(43) Date of publication of application: **08.08.2018**
(21) Application number: 16850907.3
(22) Date of filing: 05.08.2016
(51) Int. Cl.: H01G 9/02, H01G 11/52, H01M 2/16

(54) **ELECTROCHEMICAL DEVICE SEPARATOR AND ELECTROCHEMICAL DEVICE**

(30) Priority: 30.09.2015 JP 2015193821
(71) Applicant: Nippon Kodoshi Corporation, Kochi-shi, Kochi 781-0395 (JP)
(72) Inventor: MURAOKA, Takuya, Kochi-shi, Kochi 781-0395 (JP); FUJIMOTO, Naoki, Kochi-shi, Kochi 781-0395 (JP); TANAKA, Kosuke, Kochi-shi, Kochi 781-0395 (JP); SAKAMOTO, Kazuyuki, Kochi-shi, Kochi 781-0395 (JP)
(74) Representative: Betten & Resch
(86) International application number: PCT/JP2016/073107
(87) International publication number: WO 2017/056730

(57) **Abstract**

Provided is an electrochemical device separator that can reduce the amount of gas produced within a casing and can suppress an increase in pressure after said electrochemical device has been manufactured. The electrochemical device separator, which is interposed between a pair of electrodes and is capable of retaining an electrolytic solution containing an electrolyte, is configured such that the total chlorine content according to quartz tube combustion gas absorption ion chromatography is 10 ppm or less, the total sulfur content according to the abovementioned ion chromatography is 100 ppm or less, and the R18 value according to TAPPI T 235 cm-09 is 90% or higher.

## Description

### Technical Field

The present invention relates to a separator suitable for an electrochemical device and an electrochemical device including the separator. The present invention is suitable for applications to separators for electrochemical devices such as aluminum electrolytic capacitors, electric double-layer capacitors, lithium-ion capacitors, and lithium-ion secondary batteries, and electrochemical devices.

### Background Art

In recent years, in automotive instruments and digital instruments in which electronics have been advanced, components installed in the instruments are required to have extended lives. Life extension of the components installed in such instruments is one of factors for realizing life extension of the instruments and provides a significant advantage.

As components that supply such instruments with electric power, electrochemical devices are widely used. A main purpose of the electrochemical devices is to store electricity and supply the electricity according to the needs of demand portions.

Electrochemical devices such as aluminum electrolytic capacitors, electric double-layer capacitors, and lithium-ion secondary batteries are each constituted by separating electrodes with a separator disposed therebetween and causing the separator to retain an electrolytic solution.

In general, these electrochemical devices are each used in a state of being sealed in a casing or the like. Accordingly, when gas is generated within the casing or the like, the inner pressure of the casing increases, and a load is applied to the electrochemical device, which may result in, for example, degradation of properties of the electrochemical device, occurrence of a short-circuit defect, and occurrence of liquid leakage/gas leakage.

There are a plurality of causes of the generation of gas in the casing of an electrochemical device.

For example, in the case of aluminum electrolytic capacitors, it is known that a loss portion of an aluminum oxide film, which is a dielectric, is repaired by an electrolytic solution, and hydrogen gas is generated at this time. In addition, a separator reacts with an electrolytic solution and decomposes, and gas may be thereby generated. Furthermore, an electrode material is corroded by ionic impurities, such as a chloride ion and a sulfate ion, which are contained in an electrochemical device, and gas may be thereby generated.

The mechanism of the gas generation in aluminum electrolytic capacitors similarly applies to other electrochemical devices such as electric double-layer capacitors and lithium-ion secondary batteries.

Hitherto, for example, configurations of PTL 1 to PTL 3 have been proposed as technologies that focus on the gas generation of electrochemical devices.

### Citation List

### Patent Literature

PTL 1: Japanese Unexamined Patent Application Publication No. 2001-244154
PTL 2: Japanese Unexamined Patent Application Publication No. 10-144572
PTL 3: Japanese Unexamined Patent Application Publication No. 2009-088295

### Summary of Invention

### Technical Problem

PTL 1 proposes an electrolytic capacitor having a mechanism in which gas generated within the electrolytic capacitor is discharged to the outside of a casing. A through-hole is formed in the casing, and the through-hole is closed with a water-repellent porous resin. Thus, only the generated gas can be discharged to the outside of the casing without leaking an electrolytic solution.

However, since the gas generated from the electrochemical device does not actually decrease, the inner pressure of the casing still increases compared with that in the initial state. Accordingly, the effect of improving the degradation of properties of the electrochemical device is not sufficiently provided.

PTL 2 proposes a configuration in which a nitro compound such as nitromethane, nitroethane, or nitrotoluene is added to an electrolytic solution. According to this configuration, since the nitro compound absorbs hydrogen gas generated during repairing of a chemical conversion coating of an electrolytic capacitor, an increase in the inner pressure of a casing is reduced.

However, although the effect is obtained in absorption of hydrogen gas, no effect is obtained for other types of gas. Thus, the effect of reducing an increase in the inner pressure of the casing is not sufficiently provided.

PTL 3 proposes an electrolytic solution in which an enzyme is incorporated, thereby suppressing a reaction between the electrolytic solution and a separator to suppress gas generation due to decomposition of the separator.

However, it is widely known that enzymes, which are proteins, are denatured and deactivated at high temperatures. Therefore, the above configuration cannot keep pace with the recent circumstances in which the use of electrochemical devices in a more severe environment than before, for example, in a high-temperature environment such as in an engine compartment of an automobile, has also been increasing.

In addition, separators contain cellulose as a main material. Accordingly, when cellulase is used as the enzyme, decomposition of cellulose occurs, which may result in acceleration of the gas generation instead.

The present invention has been made in view of the problems described above. An object of the present invention is to provide an electrochemical device separator in which, after an electrochemical device has been manufactured, the amount of gas generated within a casing can be reduced and an increase in pressure can be suppressed by reducing, in the separator, the contents of substances that can become a cause of gas generation within the electrochemical device. Another object is to achieve life extension of an electrochemical device by using the separator.

### Solution to Problem

A separator according to the present invention is an electrochemical device separator that is interposed between a pair of electrodes and is capable of retaining an electrolytic solution containing an electrolyte, in which a total chlorine content according to quartz tube combustion method ion chromatography is 10 ppm or less, a total sulfur content according to the ion chromatography is 100 ppm or less, and an R18 value according to TAPPI T 235 cm-09 is 90% or higher.

The term "quartz tube combustion method ion chromatography" used herein refers to ion chromatography in which a sample is completely combusted in a quartz tube, and a liquid prepared by causing gas generated at this time to be absorbed by water is used as a test liquid.

The term "R18 value" refers to a ratio of a residue after immersion and stirring in an 18 mass% aqueous sodium hydroxide solution, the ratio being expressed in terms of percentage. Herein, the method specified in TAPPI T 235 cm-09 was employed.

### Advantageous Effects of Invention

The separator according to the present invention has an R18 value according to TAPPI T 235 cm-09 of 90% or higher. Therefore, even when the separator is placed in a high-temperature environment, the amount of gas generated from the separator is small, and a reaction with an electrolytic solution is suppressed. In addition, since the total chlorine content is 10 ppm or less, and the total sulfur content is 100 ppm or less, electrode materials are not corroded, and generation of gas does not occur.

Therefore, according to the present invention, it is possible to provide a separator in which thermal decomposition, a reaction with an electrolytic solution, and elution of impurities are suppressed even in a high-temperature environment.

In addition, by using the separator, an increase in the inner pressure of a casing of an electrochemical device can be suppressed to achieve life extension of the electrochemical device.

### Description of Embodiments

An embodiment of the present invention will be described in detail below.

A separator according to the embodiment is a separator interposed between two electrodes, in which a total chlorine content according to quartz tube combustion method ion chromatography is 10 ppm or less, a total sulfur content according to the ion chromatography is 100 ppm or less, and an R18 value according to TAPPI T 235 cm-09 is 90% or higher.

An electrochemical device according to the embodiment includes a separator interposed between two electrodes, the separator having the configuration described above.

Chlorine and sulfur components measured by quartz tube combustion method ion chromatography have various forms in the separator.

For example, in the case of chlorine, chlorine is present in the form of, in addition to a chloride salt, for example, chlorous acid, hypochlorous acid, chloric acid, and a salt thereof and present as an organochlorine compound that is bonded directly to cellulose or the like. These chlorine components are contained in water used in manufacturing of the separator or contained in some of bleaching steps. As a result, the chlorine components remain in the separator. Bleaching is broadly divided into chlorine bleaching and chlorine-free bleaching. The chlorine-free bleaching can be further classified into elemental chlorine free (hereinafter abbreviated as "ECF") and total chlorine free (hereinafter abbreviated as "TCF"). The TCF is a bleaching method in which neither chlorine nor chlorine compounds are used. In the ECF, although neither molecular chlorine nor hypochlorous acid is used, a chlorine-based compound such as chlorine dioxide is used.

In the case of sulfur, sulfur is present in the form of, for example, hydrogen sulfide, methyl mercaptan, methyl sulfide, and methyl disulfide and present as an organosulfur compound that is bonded directly to cellulose or the like. These sulfur components are generated in a chemical agent used in production of a pulp from a raw material such as a chip or a raw hemp or generated as a result of a reaction between such a chemical agent and a raw material. As a result, the sulfur components remain in the separator. A plurality of processes for producing a pulp from a chip or a raw hemp (digestion processes) are known. For example, a kraft process, a sulfite process, and a soda process are typically employed.

After an electrochemical device is produced, while the electrochemical device is used for a long time or at a high temperature, these elements are dissolved into an electrolytic solution, corrode an electrode material, generate hydrogen gas or the like, or are partially gasified directly, resulting in an increase in the inner pressure of a casing of the electrochemical device.

As a result, a pressure is applied to the electrochemical device, which may result in a change in the performance or result in liquid leakage/gas leakage defects. Furthermore, even if the product does not become defective immediately after being applied to the pressure, the life of the product is shortened after the product is put on the market.

In other words, chlorine and sulfur in the separator mainly indirectly accelerate gas generation in the electrochemical device. As a result, the chlorine and sulfur shorten the life of the electrochemical device.

The term "R18 value" refers to a ratio of a residue remaining after immersion and stirring in an 18% aqueous sodium hydroxide solution for a certain period of time, the ratio being expressed in terms of percentage. Thus, the R18 value is used as an index for determining alkali resistance of pulps and the like.

In the present invention, this value is used as an index for determining the amount of gas generated.

In general, separators are formed by fibers of cellulose or the like. Cellulose fibers may contain a component that is not pure cellulose. Examples of the component that is not pure cellulose include lignin, hemicellulose, pectin, xylan, mannan, and pentosan.

As a result of focusing on the gas generation of an electrochemical device, it was found that these components that are not cellulose are, for example, decomposed and gasified. Presumably, this is because these components are inferior to cellulose in terms of heat resistance and chemical stability and thus susceptible to the influence of the temperature, electrolytic solution, and the like. In decomposition and gasification of the separator, although gasification of the components that are not cellulose proceeds preferentially, decomposition of cellulose also occurs slightly in parallel at the same time.

Also in the measurement of the R18 value, similarly, although the components that are not pure cellulose are preferentially decomposed, cellulose is also slightly decomposed.

These show that the tendency of decomposition of a separator in an electrochemical device is similar to the tendency of decomposition of a separator in the measurement of the R18 value.

Accordingly, it is suitable to measure the R18 value as an index for determining a decomposition property of a separator. In other words, a separator having a large R18 value is a separator having a small content of a component that gasifies directly in an electrochemical device.

The measurement of the total chlorine content and the total sulfur content in the separator and the R18 value of the separator enables components that directly and indirectly become the causes of gas generation to be grasped.

Furthermore, by using a separator having a total chlorine content according to quartz tube combustion method ion chromatography of 10 ppm or less, a total sulfur content of 100 ppm or less, and an R18 value of 90% or higher, which is the separator according to the embodiment, a good separator can be obtained in which gas generation is suppressed regardless of whether the gas generation occurs directly or indirectly.

### [Description of Separator]

The separator according to the embodiment has a total chlorine content of 10 ppm or less, a total sulfur content of 100 ppm or less, and an R18 value of 90% or higher.

The type of fibers used in the separator is not particularly limited as long as the above conditions are satisfied. Any fiber that is commonly used can be used.

For example, wood pulps, non-wood pulps, and regenerated cellulose fibers are suitably used.

These pulps and fibers may be subjected to a bleaching treatment or may be purified products such as dissolving pulps or mercerized pulps.

Various plants can be used for the pulps. Examples of plants used for wood pulps include softwoods such as spruce, fir, pine, and hemlock; and hardwoods such as beech, oak, birch, and eucalyptus. Examples of plants used for non-wood pulps include vein fibers such as Manila hemp, sisal hemp, banana, and pineapple; bast fibers such as paper mulberry, paper bush, Gampi, jute, kenaf, hemp, and flax; true grass fibers such as esparto, bamboo, bagasse, rice straw, rye straw, and reed; seed hair fibers such as cotton, linter, and kapok; fruit fibers such as palm; and other plants such as mat rush and sabai grass.

As the regenerated cellulose fibers, solvent-spun regenerated cellulose fibers can be suitably used.

These may be used alone or a plurality of these may be selected and used.

Examples of a method for manufacturing a pulp that satisfies all of the conditions for the total chlorine content, the total sulfur content, and the R18 value include the following, also in view of a pretreatment and a posttreatment.

Examples thereof include unbleached soda pulps, unbleached dissolving kraft pulps, unbleached dissolving sulfite pulps, unbleached dissolving soda pulps, TCF bleached kraft pulps, TCF bleached sulfite pulps, TCF bleached soda pulps, TCF bleached dissolving kraft pulps, TCF bleached dissolving sulfite pulps, and TCF bleached dissolving soda pulps. These pulps may be subjected to a mercerization treatment.

However, the method is not particularly limited to the examples described above as long as the separator satisfies the total chlorine content, the total sulfur content, and the R18 value described above. Pulps manufactured by other methods can also be used.

The names of pulps of the embodiment each represent the type of fiber, bleached or unbleached or a bleaching method, a dissolving pulp or a mercerized pulp, and a manufacturing method in that order. When neither "dissolving" nor "mercerized" is described, the pulp is neither a dissolving pulp nor a mercerized pulp.

A total chlorine content of more than 10 ppm or a total sulfur content of more than 100 ppm is not preferable because corrosion of other members of the electrochemical device is accelerated, resulting in an increase in the amount gas generated.

An R18 value of lower than 90% is not preferable because decomposition of the separator and gasification of volatile components increase.

The fibers used for the separator may be subjected to a beating treatment. In this beating treatment, a beating apparatus that is commonly used to prepare a papermaking material, such as a disc refiner, a conical refiner, a highpressure homogenizer, or a beater can be used without particular limitation. The Canadian Standard Freeness (CSF) value, which represents the degree of beating, can be set to any value in a range of 0 to 800 mL. Note that the CSF value used herein is a value determined by "JIS P8121-2, Pulps - Determination of drainability - Part 2: Canadian Standard freeness method".

The separator is formed by a papermaking process. The papermaking form can be selected from Fourdrinier papermaking, tanmo papermaking, and cylinder papermaking. The separator may be formed of multi-layer paper obtained by employing a plurality of these in combination. In papermaking, additives that are commonly used, such as a dispersant, an anti-foaming agent, and a paper strength additive may be added. Furthermore, after the formation of a paper sheet, a post-process such as a paper-strength increasing process, a calendering process, or an embossing process may be performed.

### [Methods for Measuring Properties of Separator and Electrochemical Device]

Specific measurements of properties of separators and electrochemical devices according to the embodiment were conducted by the following methods under the following conditions.

### [Thickness]

The thickness of a separator was measured by a method in which paper is repeatedly folded to form 10 layers, the method being described in "5.1.3 Case where paper is folded and the thickness of the folded paper is measured", with a micrometer described in "5.1.1 Measurement instrument and measurement method, a. Case where an external micrometer is used" specified in "JIS C 2300-2 'Cellulosic papers for electrical purposes - Part 2: Methods of test' 5.1 Thickness" .

### [Density]

The density of a separator in an absolute dry condition was measured by method B specified in "JIS C 2300-2 'Cellulosic papers for electrical purposes - Part 2: Methods of test' 7.0A Density".

### [Total Chlorine Content and Total Sulfur Content Determined by Quartz Tube Combustion Method Ion Chromatography]

The measurement was conducted in accordance with "JIS K0127 'General rules for ion chromatography "'. A sample was subjected to a pretreatment by the quartz tube combustion method described in "the same JIS K0127 6.3.5 Combustion pretreatment of organic compound". Generated gas was absorbed by an absorption liquid, and the resulting liquid was used in the measurement.

### [R18 value]

The measurement was conducted by the method specified in "TAPPI T 235cm-09 'Alkali solubility of pulp at 25°C"' specified in the Technical Association of the Pulp and Paper Industry (TAPPI).

### [Production of Aluminum Electrolytic Capacitor Including Separator]

A method for producing an aluminum electrolytic capacitor including a separator according to the embodiment will be described below.

An anode foil and a cathode foil were wound with a separator according to the embodiment disposed therebetween to obtain an aluminum electrolytic capacitor device. The device was placed in a cylindrical aluminum casing with a bottom, an electrolytic solution was injected into the casing, and vacuum impregnation was performed. Subsequently, the casing was sealed with an end-sealing rubber to produce an aluminum electrolytic capacitor.

### [Production of Electric Double-Layer Capacitor Including Separator]

A method for producing an electric double-layer capacitor including a separator according to the embodiment will be described below.

Activated carbon electrodes were wound with a separator according to the embodiment disposed therebetween to obtain an electric double-layer capacitor device. The device was placed in a cylindrical aluminum casing with a bottom, an electrolytic solution was injected into the casing, and vacuum impregnation was performed. Subsequently, the casing was sealed with an end-sealing rubber to produce an electric double-layer capacitor.

### [Production of Lithium-Ion Capacitor Including Separator]

A method for producing a lithium-ion capacitor including a separator according to the embodiment will be described below.

An activated carbon electrode for a lithium-ion capacitor was used as a positive electrode material, and a graphite electrode was used as a negative electrode material. The electrodes were wound with a separator according to the embodiment disposed therebetween to obtain a lithium-ion capacitor device. The device was placed in a cylindrical aluminum casing with a bottom, an electrolytic solution was injected into the casing, and vacuum impregnation was performed. Subsequently, the casing was sealed with an end-sealing rubber to produce a lithium-ion capacitor.

### [Production of Lithium-Ion Secondary Battery Including Separator]

A method for producing a lithium-ion secondary battery including a separator according to the embodiment will be described below.

A lithium cobalt oxide electrode for a lithium-ion secondary battery was used as a positive electrode material, and a graphite electrode was used as a negative electrode material. The two electrode materials were wound with a separator to obtain a lithium-ion secondary battery device. The device was placed in a cylindrical casing with a bottom. An electrolytic solution in which tetraethylammonium tetrafluoroborate serving as an electrolyte was dissolved in a propylene carbonate solvent was injected into the casing, and the resulting casing was sealed by a pressing machine to produce a lithium-ion secondary battery.

### [Method for Evaluating Electrochemical Device]

Specific performance evaluations of electrochemical devices according to the embodiment were conducted by the following methods under the following conditions.

### [Method for Measuring Resistance]

The resistance of an aluminum electrolytic capacitor produced as described above was measured with an LCR meter at 20°C and a frequency of 100 kHz.

The internal resistances of an electric double-layer capacitor and a lithium-ion capacitor were measured by the alternating-current (a.c.) resistance method of "4.6 Internal resistance" specified in "JIS C 5160-1 'Fixed electric double-layer capacitors for use in electronic equipment"'.

The internal resistance of a lithium-ion secondary battery was measured in accordance with "8.6.3 Alternating-current internal resistance" specified in "JIS C 8715-1 'Secondary lithium cells and batteries for use in industrial applications - Part 1: Tests and requirements of performance'".

### [Rate of Deterioration of Resistance Due to Load Test]

A load test of each electrochemical device was conducted under the conditions described below.

To an aluminum electrolytic capacitor, a rated DC voltage was applied in an environment at 105°C for 100 hours.

To an electric double-layer capacitor and a lithium-ion capacitor, a DC voltage of 2.5 V was applied in an environment at 60°C for 500 hours.

A lithium-ion secondary battery was subjected to charging and discharging of 3C charging-discharging for 500 cycles in an environment at 50°C.

After the load test, the resistance after the load test was measured by the method for measuring the resistance described above.

Subsequently, the difference between the resistance after the load test and the initial resistance was divided by the initial resistance to calculate a rate of deterioration of the resistance. The rate of deterioration of the resistance due to the load test is represented by percentage.

### [Appearance after Load Test]

After the load test, visual observation was performed. A sample in which no change was observed before and after the test was rated as "Good". A sample in which blistering was observed was rated as "Fair". A sample in which liquid leakage or gas leakage due to damage of a casing or the like was observed was rated as "Poor".

### EXAMPLES

Hereinafter, specific examples according to the present invention and comparative examples will be described.

Separators in each of the examples and the comparative examples were formed by a papermaking process.

The size of an electrochemical device was described in the order of diameter (mm) × height (mm).

### [Example 1]

A raw material was formed into paper with a Fourdrinier machine to prepare a sheet of a first layer, the raw material being prepared by mixing 50% by mass of a softwood TCF bleached kraft pulp and 50% by mass of a Manila hemp TCF bleached soda pulp and beating the resulting mixture with a disc refiner until the CSF value became 550 mL. A raw material was formed into paper with a cylinder machine to prepare a sheet of a second layer, the raw material being prepared by beating, with a disc refiner until the CSF value became 200 mL, a raw material having the same composition as the sheet of the first layer. The sheet of the first layer was subjected to a papermaking process in combination with the sheet of the second layer to obtain a separator of Example 1. A mass ratio of the layers of this separator is first layer:second layer = 6:4.

The separator had a thickness of 60 µm, a density of 0.79 g/cm³, a total chlorine content of 6 ppm, a total sulfur content of 35 ppm, and an R18 value of 93%.

An aluminum electrolytic capacitor having a rated voltage of 450 V, a rated capacity of 50 µF, and a size of 18 mm × 20 mm was produced by using the separator to provide the aluminum electrolytic capacitor of Example 1.

### [Example 2]

A raw material prepared by beating a softwood TCF bleached mercerized kraft pulp with a disc refiner until the CSF value became 300 mL was formed into paper with a Fourdrinier machine to prepare a sheet of a first layer. A raw material prepared by beating a sisal TCF bleached soda pulp with a disc refiner until the CSF value became 600 mL was formed into paper with a cylinder machine to prepare a sheet of a second layer. The sheet of the first layer was subjected to a papermaking process in combination with the sheet of the second layer to obtain a separator of Example 2. A mass ratio of the layers of this separator is first layer:second layer = 6:4.

The separator had a thickness of 50 µm, a density of 0.68 g/cm³, a total chlorine content of 2 ppm, a total sulfur content of 65 ppm, and an R18 value of 95%.

An aluminum electrolytic capacitor having a rated voltage of 200 V, a rated capacity of 120 µF, and a size of 16 mm × 25 mm was produced by using the separator to provide the aluminum electrolytic capacitor of Example 2.

### [Example 3]

A raw material was formed into paper with a cylinder machine to prepare a layer, the raw material being prepared by mixing 40% by mass of an esparto pulp, 30% by mass of a Manila hemp pulp, and 30% by mass of a sisal pulp and beating the resulting mixture with a disc refiner until the CSF value became 550 mL. Two layers each prepared as described above were subjected to a papermaking process in combination to obtain a separator of Example 3.

The separator had a thickness of 40 µm, a density of 0.40 g/cm³, a total chlorine content of 3 ppm, a total sulfur content of 10 ppm, and an R18 value of 90%.

These pulps were each an unbleached soda digested pulp.

An aluminum electrolytic capacitor having a rated voltage of 15 V, a rated capacity of 550 µF, and a size of 10 mm × 20 mm was produced by using the separator to provide the aluminum electrolytic capacitor of Example 3.

### [Example 4]

A raw material was formed into paper with a tanmo machine to obtain a separator of Example 4, the raw material being prepared by mixing 50% by mass of a hardwood TCF unbleached dissolving sulfite pulp and 50% by mass of a bamboo TCF bleached soda pulp and beating the resulting mixture with a disc refiner until the CSF value became 500 mL.

The separator had a thickness of 50 µm, a density of 0.56 g/cm³, a total chlorine content of 8 ppm, a total sulfur content of 70 ppm, and an R18 value of 90%.

An aluminum electrolytic capacitor having a rated voltage of 50 V, a rated capacity of 150 µF, and a size of 10 mm × 20 mm was produced by using the separator to provide the aluminum electrolytic capacitor of Example 4.

### [Example 5]

A raw material was formed into paper with a Fourdrinier machine to prepare a sheet of a first layer, the raw material being prepared by mixing 60% by mass of a softwood ECF bleached dissolving kraft pulp and 40% by mass of a hardwood TCF bleached dissolving kraft pulp and beating the resulting mixture with a disc refiner to 500 mL. A raw material was formed into paper with a cylinder machine to prepare a sheet of a second layer, the raw material being prepared by beating, with a disc refiner until the CSF value became 400 mL, a raw material having the same composition as the sheet of the first layer. The sheet of the first layer was subjected to a papermaking process in combination with the sheet of the second layer to obtain a separator of Example 1. A mass ratio of the layers of this separator is first layer:second layer = 7:3.

The separator had a thickness of 60 µm, a density of 0.81 g/cm³, a total chlorine content of 9 ppm, a total sulfur content of 90 ppm, and an R18 value of 91%.

An aluminum electrolytic capacitor having a rated voltage of 450 V, a rated capacity of 50 µF, and a size of 18 mm × 20 mm was produced by using the separator to provide the aluminum electrolytic capacitor of Example 5.

### [Example 6]

A raw material prepared by beating solvent-spun regenerated cellulose fibers with a disc refiner until the CSF value became 5 mL was formed into paper with a Fourdrinier machine to obtain a separator of Example 6.

The separator had a thickness of 40 µm, a density of 0.40 g/cm³, a total chlorine content of 2 ppm, a total sulfur content of 50 ppm, and an R18 value of 97%.

The raw material pulp of the solvent-spun regenerated cellulose is a hardwood TCF bleached dissolving sulfite pulp.

An aluminum electrolytic capacitor having a rated voltage of 100 V, a rated capacity of 50 µF, and a size of 12 mm × 20 mm was produced by using the separator to provide the aluminum electrolytic capacitor of Example 6.

### [Comparative Example 1]

A separator of Comparative Example 1 was obtained as in Example 1 except that a softwood ECF bleached kraft pulp was used instead of the softwood TCF bleached kraft pulp.

The separator had a thickness of 60 µm, a density of 0.79 g/cm³, a total chlorine content of 20 ppm, a total sulfur content of 62 ppm, and an R18 value of 95%.

An aluminum electrolytic capacitor having a rated voltage of 450 V, a rated capacity of 50 µF, and a size of 18 mm × 20 mm was produced by using the separator to provide the aluminum electrolytic capacitor of Comparative Example 1.

### [Comparative Example 2]

A separator of Comparative Example 2 was obtained as in Example 2 except that a softwood unbleached soda pulp was used instead of the softwood TCF bleached dissolving kraft pulp.

The separator had a thickness of 50 µm, a density of 0.68 g/cm³, a total chlorine content of 2 ppm, a total sulfur content of 15 ppm, and an R18 value of 85%.

An aluminum electrolytic capacitor having a rated voltage of 200 V, a rated capacity of 120 µF, and a size of 16 mm × 25 mm was produced by using the separator to provide the aluminum electrolytic capacitor of Comparative Example 2.

### [Comparative Example 3]

A separator of Comparative Example 3 was obtained as in Example 6 except that polynosic rayon was used instead of the solvent-spun regenerated cellulose fibers.

The separator had a thickness of 40 µm, a density of 0.41 g/cm³, a total chlorine content of 5 ppm, a total sulfur content of 105 ppm, and an R18 value of 95 ppm.

An aluminum electrolytic capacitor having a rated voltage of 100 V, a rated capacity of 50 µF, and a size of 12 mm × 20 mm was produced by using the separator to provide the aluminum electrolytic capacitor of Comparative Example 3.

### [Example 7]

An electric double-layer capacitor having a rated voltage of 2.5 V, a rated capacity of 300 F, and a size of 35 mm × 60 mm was produced by using the same separator as that in Example 6 to provide the electric double-layer capacitor of Example 7.

### [Example 8]

A lithium-ion capacitor having a rated voltage of 3.8 V, a rated capacity of 1,000 F, and a size of 40 mm × 110 mm was produced by using the same separator as that in Example 6 to provide the lithium-ion capacitor of Example 8.

### [Example 9]

A lithium-ion secondary battery having a rated voltage of 3.7 V, a rated capacity of a 3 Ah, and a size of 18 mm × 65 mm was produced by using the same separator as that in Example 6 to provide the lithium-ion secondary battery of Example 9.

Table 1 shows the measurement results of the properties of the separators and the aluminum electrolytic capacitors of Examples 1 to 6 and Comparative Examples 1 to 3.

**[Table 1]**

| | Separator | | | | | Aluminum electrolytic capacitor | |
|---|---|---|---|---|---|---|---|
| | Thickness (*µ*m) | Density (g/cm³) | Total chlorine content (ppm) | Total sulfur content (ppm) | R18 value (%) | Rate of deterioration of resistance (%) | Appearance after load test |
| Example 1 | 60 | 0.79 | 6 | 35 | 93 | 14 | Good |
| Example 2 | 50 | 0.68 | 2 | 65 | 95 | 10.5 | Good |
| Example 3 | 40 | 0.40 | 3 | 10 | 90 | 11.5 | Good |
| Example 4 | 50 | 0.56 | 8 | 70 | 90 | 15.3 | Good |
| Example 5 | 60 | 0.81 | 9 | 90 | 91 | 17.3 | Good |
| Example 6 | 40 | 0.40 | 2 | 50 | 97 | 8.8 | Good |
| Comparative Example 1 | 60 | 0.79 | 20 | 62 | 95 | - | Poor |
| Comparative Example 2 | 50 | 0.68 | 2 | 15 | 85 | 25.2 | Fair |
| Comparative Example 3 | 40 | 0.41 | 5 | 105 | 95 | 24.5 | Fair |

Table 2 shows the measurement results of the properties of the electric double-layer capacitor of Example 7, Table 3 shows the measurement results of the properties of the lithium-ion capacitor of Example 8, and Table 4 shows the measurement results of the properties of the lithium-ion secondary battery of Example 9.

**[Table 2]**

| | Separator | | | | | Lithium-ion secondary battery | |
|---|---|---|---|---|---|---|---|
| | Thickness (*µ*m) | Density (g/cm³) | Total chlorine content (ppm) | Total sulfur content (ppm) | R18 value (%) | Rate of deterioration of resistance (%) | Appearance after load test |
| Example 9 | 40 | 0.40 | 2 | 50 | 97 | 18 | Good |

**[Table 3]**

| | Separator | | | | | Electric double-layer capacitor | |
|---|---|---|---|---|---|---|---|
| | Thickness (*µ*m) | Density (g/cm³) | Total chlorine content (ppm) | Total sulfur content (ppm) | R18 value (%) | Rate of deterioration of resistance (%) | Appearance after load test |
| Example 7 | 40 | 0.40 | 2 | 50 | 97 | 18.5 | Good |

**[Table 4]**

| | Separator | | | | | Uthium-ion capacitor | |
|---|---|---|---|---|---|---|---|
| | Thickness (*µ*m) | Density (g/cm³) | Total chlorine content (ppm) | Total sulfur content (ppm) | R18 value (%) | Rate of deterioration of resistance (%) | Appearance after load test |
| Example 8 | 40 | 0.40 | 2 | 50 | 97 | 17 | Good |

As shown in the results in Table 1, each of the aluminum electrolytic capacitors of Examples 1 to 6 has a rate of deterioration of the resistance of 20% or less after the load test, which shows good results. In addition, degradation of appearance is also not observed, which shows good results.

The aluminum electrolytic capacitor of Comparative Example 1 is the same as that of Example 1 except that a softwood ECF bleached kraft pulp was used instead of the softwood TCF bleached kraft pulp. However, the appearance after the load test was rated as "Poor". Furthermore, the electrolytic solution was volatilized, and the resistance after the load test could not be measured. The comparison between Comparative Example 1 and each of the examples shows that the total chlorine content is preferably 10 ppm or less.

The aluminum electrolytic capacitor of Comparative Example 2 is the same as that of Example 2 except that a softwood unbleached soda pulp was used instead of the softwood TCF bleached dissolving kraft pulp. However, the appearance after the load test was rated as "Fair". Furthermore, the rate of deterioration of the resistance after the load test was also as high as 25.2%. The comparison between Comparative Example 2 and each of the examples shows that the R18 value is preferably 90% or higher.

The aluminum electrolytic capacitor of Comparative Example 3 is the same as that of Example 6 except that polynosic rayon was used instead of the solvent-spun regenerated cellulose fibers. However, the appearance after the high-temperature treatment was rated as "Fair". Furthermore, the rate of deterioration of the resistance after the load test was also as high as 24.5%. The comparison between Comparative Example 3 and each of the examples shows that the total sulfur content is preferably 100 ppm or less.

The comparison between Example 3, Example 4, and other examples shows that, regarding the papermaking form, there is no particular difference between Fourdrinier papermaking, cylinder papermaking, tanmo papermaking, and a combination thereof.

Referring to Example 5, it is found that even in a separator obtained by using a pulp having a high total chlorine content in terms of pulp alone, such as an ECF bleached pulp, an increase in gas generation does not occur as long as the total chlorine content is 10 ppm or less as a whole. Considering also other examples, it is believed that this also applies similarly to the total sulfur content and the R18 value.

Furthermore, referring to the examples, it is found that the effect of suppressing gas generation is achieved regardless of the thickness and the density of the separator.

Referring to Examples 7 to 9, these separators can also be used in electric double-layer capacitors, lithium-ion capacitors, and lithium-ion secondary batteries.

As described above, according to the embodiment, it is possible to provide an electrochemical device separator which has a total chlorine content of 10 ppm or less, a total sulfur content of 100 ppm or less, and an R18 value of 90% or higher and in which gas generation is unlikely to occur.

In addition, the use of the separator provides an electrochemical device in which degradation of properties due to gas generation is suppressed and which has an extended life.

A description has been made of examples in which a separator of the embodiment is used in an aluminum electrolytic capacitor, an electric double-layer capacitor, a lithium-ion capacitor, or a lithium-ion secondary battery.

A description of details of other configurations of the aluminum electrolytic capacitor, the electric double-layer capacitor, the lithium-ion capacitor, and the lithium-ion secondary battery, and methods for manufacturing these devices has been omitted. However, in aluminum electrolytic capacitors, electric double-layer capacitors, lithium-ion capacitors, and lithium-ion secondary batteries, which correspond to electrochemical devices including the separator according to the present invention, electrode materials, electrolytic solution materials, other members, and the like do not require particular limitations, and various materials can be used.

A plurality of separators according to the present invention may be used in a stacked manner.

## Claims

1. An electrochemical device separator that is interposed between a pair of electrodes and is capable of retaining an electrolytic solution containing an electrolyte,
wherein a total chlorine content according to quartz tube combustion gas absorption ion chromatography is 10 ppm or less, a total sulfur content according to the ion chromatography is 100 ppm or less, and
an R18 value according to TAPPI T 235 cm-09 is 90% or higher.

2. An electrochemical device comprising the electrochemical device separator according to Claim 1.

3. The electrochemical device according to Claim 2, being an aluminum electrolytic capacitor, an electric double-layer capacitor, a lithium-ion capacitor, or a lithium-ion secondary battery.
